# EUROPEAN PATENT SPECIFICATION

(11) **EP 1 707 481 B1**
(45) Date of publication and mention of the grant of the patent: **18.02.2015**
(21) Application number: 05703641.0
(22) Date of filing: 14.01.2005
(51) Int. Cl.: B62J 33/00, H05B 3/20

(54) **HANDLE GRIP WITH HEATER**
HANDGRIFF MIT HEIZVORRICHTUNG
POIGNEE AVEC UN ELEMENT CHAUFFANT

(30) Priority: 16.01.2004 JP 2004009322; 16.01.2004 JP 2004009323; 16.01.2004 JP 2004009324
(43) Date of publication of application: 04.10.2006
(73) Proprietor: Faltec Co., Ltd., Kawasaki-shi, Kanagawa 212-0013 (JP)
(72) Inventor: SASAKI, Kouzou, RYOSEI ELECTRO-CIRCUIT SYSTEMSLTD, Tokyo 1768516 (JP); NAKAGAWA, Chihiro, Tokyo 1768516 (JP); AMBO, Tsugio, RYOSEI ELECTRO-CIRCUIT SYSTEMS, LTD., Tokyo 1768516 (JP); NAKAYAMA, Kimio RYOSEI ELECTRO-CIRCUIT SYSTEMS LTD, Tokyo 1768516 (JP)
(74) Representative: Bibby, William Mark
(86) International application number: PCT/JP2005/000402
(87) International publication number: WO 2005/068282

(56) References cited:
- JP-A- 7 226 287
- JP-A- 10 067 367
- JP-A- 48 001 865
- JP-A- 2002 225 768
- JP-U- 1 081 192
- JP-U- 4 051 886
- JP-U- 4 117 775
- JP-U- 63 189 990
- US-A- 5 834 734

## Description

### Field of the Invention

The present invention relates to a handle grip with heater for use in motorcycles and snowmobiles.

### Background of the invention

In cold districts, handle grips with heater have been used for warming hands of users. There have been proposed known handle grips with heater which may be typically classified in the following two types: (1) as described in a Patent document 1, a plate-like heat generating member formed by applying electrically insulating sheets on both sides of an electrical heater made of copper or SUS like as FPC is adhered onto a cylindrical core body made of synthetic resin and a molded rubber body is formed on the heat generating member; and (2) a nichrome wire or SUS plate is applied on a synthetic resin core body and a molded rubber body is formed.

The Patent document 1: Japanese Patent Application Laid-open Publication Kokai Hei 10-67366

### Disclosure of the Invention

In the known handle grip (1), since copper has a low specific resistance, a temperature rising characteristic upon a power supply is not sufficiently high. Although SUS has a large specific resistance, the FPC plate consisting of SUS is formed by etching with chemical agents, which are liable to affect an environment. Furthermore, from a point of recycling, the FPC plate is hard to handle. Moreover, a cost of such a handle grip with heater is liable to increase.

In the known handle grip with heater (2), although the nichrome wire is less expensive, the nichrome wire is liable to be broken and has a temperature rising characteristic which is worse than that of the copper used in the heat generating member of FPC of the handle grip (1). The SUS plate has a higher specific resistance and has a better temperature rising characteristic, but since the SUS plate has a large thickness, a uniform temperature distribution could not be attained.

The present invention has for its object to provide a handle grip with heater which can remove the above mentioned drawbacks and has a uniform temperature distribution and can be easily manufactured by using a heater unit including a metal foil.

It is another object of the invention to provide a handle grip with heater, in which a heater unit can be positively secured to a core body.

It is still another object of the invention to provide a handle grip with heater, in which an electric power supply wire can be positively connected to a heater unit.

### Means for Solving the Problems

According to the invention, there is provided a heatable handle grip including a cylindrical or semi-cylindrical core body made of an electrically insulating synthetic resin and a heater unit, characterized in that said heater unit includes an electrically insulating plate and a strip-shaped electric resistance member formed by uniformly applying a metal foil onto a surface of the electrically insulating plate, punching the metal foil and removing an unnecessary portion of the metal foil, said heater unit is further bent and is adhered onto the outer surface of the core body, the electric resistance member comprises two connecting ends which extend in a longitudinal direction of the core body and which have different lengths defining a stepped configuration, an electric power supply wire connected to the connecting ends extends from the connecting ends in a circumferential direction of the core body and in that said handle grip further comprises a molded synthetic rubber body provided to cover the inner and outer surfaces of an assembly of the core body and heater unit.

### Merits of the Invention

In the heatable handle grip according to the invention, since the heater unit is formed as a surface type heat-generating member, a uniform temperature distribution can be obtained. Moreover, the heatable handle grip according to the invention can be manufactured in an easy and less expensive manner with a smaller amount of materials.

In the handle grip according to the invention, the heater unit can be intimately secured onto the core body and can be correctly positioned on the core body, and therefore any positional error could not be occurred during a molding.

In the handle grip according to the invention, a wire cover may be secured to one end of the core body and the electric power supply wire can be positively secured by the wire cover.

### Brief Description of the Drawings

Fig. 1 is a perspective view showing a handle grip with a heater;
Fig. 2 is a cross sectional view of a heater unit;
Fig. 3 is a perspective view showing the heater unit;
Fig. 4 is an explanatory view depicting a manner of adhering the heater unit to a core body;
Fig. 5 is an explanatory view representing a manner of bending the heater unit with the aid of a heating means;
Fig. 6 is a perspective view showing a manner of securing the curved heater unit onto the core body;
Fig. 7 is a perspective view illustrating through holes formed in the heater unit and core body;
Fig. 8 is a perspective view showing a condition in which the heater unit is adhered on to the core body;
Fig. 9 is a perspective view illustrating a heater unit according to the invention. A step is formed at an end of the heater unit at which an electric power supply wire is connected to the heater unit;
Fig. 10 is a perspective view depicting a condition in which the core body is wholly surrounded by the heater unit;
Fig. 11 is a perspective view showing another handle grip with a heater unit
Fig. 12 is a perspective view illustrating a core body and a heater structure body in a disassembled condition;
Fig. 13 is an exploded perspective view showing the heater structure body;
Fig. 14 is a perspective view depicting an inner surface of the core body;
Fig. 15 is an enlarged perspective view illustrating an elongated groove formed in the inner surface of the core body;
Fig. 16 is a cross sectional view showing a heater unit having both ends overlapped with each other; and
Fig. 17 is a perspective view illustrating a portion of a heater unit secured around a cylindrical core body.

### Explanation of the Reference Numerals

1, 11 core body
2, 15 heater unit
3, 21 electrically insulating plate
4, 22 electric resistance member
5, 17 electric power supply wire
14 heater structure body
16 wire cover
19 supporting groove
25 elongated groove

### Best Modes of the Invention

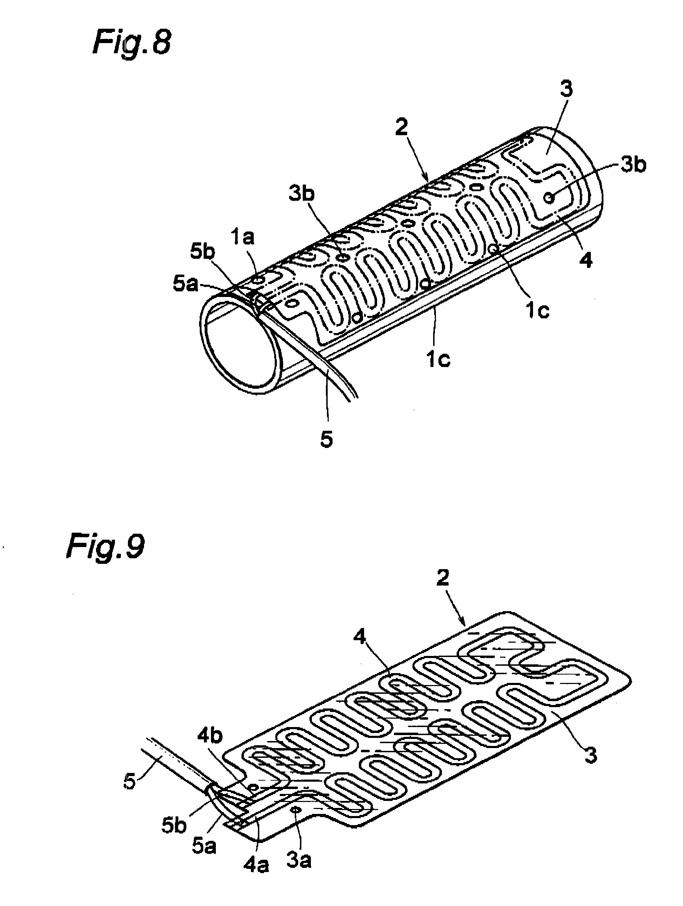

Now the present invention will be explained in detail with reference to the embodiment shown in Figure 9 of the drawings.

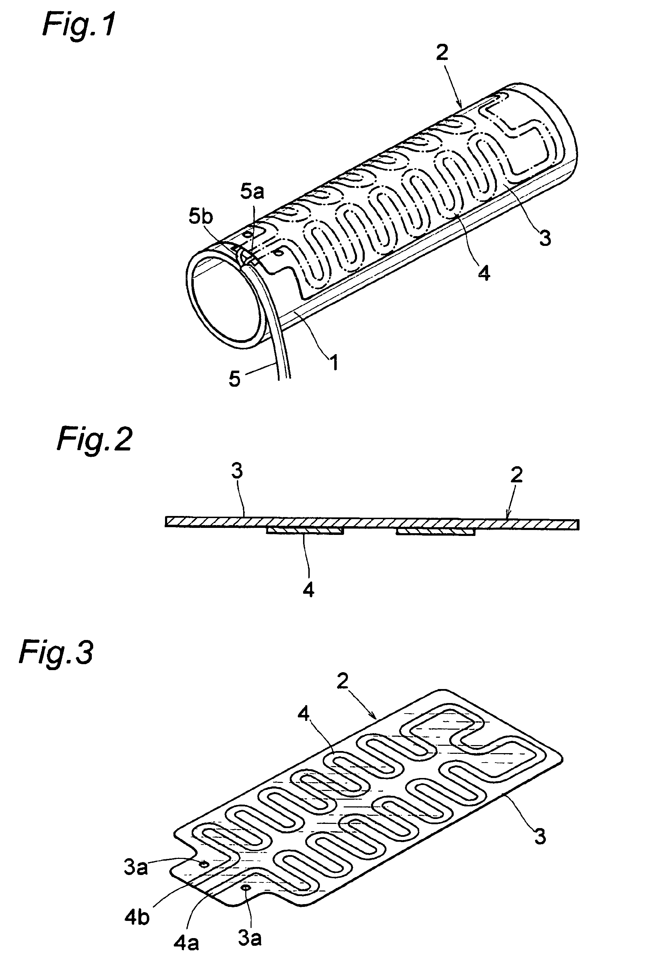

Fig. 1 is a perspective view showing a handle grip with a heater unit 2 having connection terminals that are not in accordance with the invention. On substantially half of an outer surface of a cylindrical core body 1 made of synthetic resin, a sheet-like heater unit 2 is adhered. As illustrated in Fig. 2, the heater unit 2 includes an electrically insulating and flexible insulating plate 3 made of synthetic resin and an electric resistance member 4 made of a metal foil, preferably SUS (stainless steel), adhered with a suitable adhesive agent on a lower surface of the insulating plate 3. Both ends of the electric resistance member 4 are connected to mandrels 5a and 5b of an electric power supply wire 5 by welding or soldering.

The electric resistance member 4 is obtained in the following manner. At first a SUS foil is uniformly applied on the electrically insulating plate 3, the assembly of the insulating plate and SUS foil is half-punched to form the electric resistance member 4 having a given shape as shown in Fig. 3, and then an unnecessary portion of the SUS foil is removed. In order to increase a resistance, the electric resistance member 4 has a narrow width and a long length and is formed into a zigzag shape. For instance, the electrically insulating plate 3 has a thickness of 188 µm and the electric resistance member 4 has a thickness of 30µm.

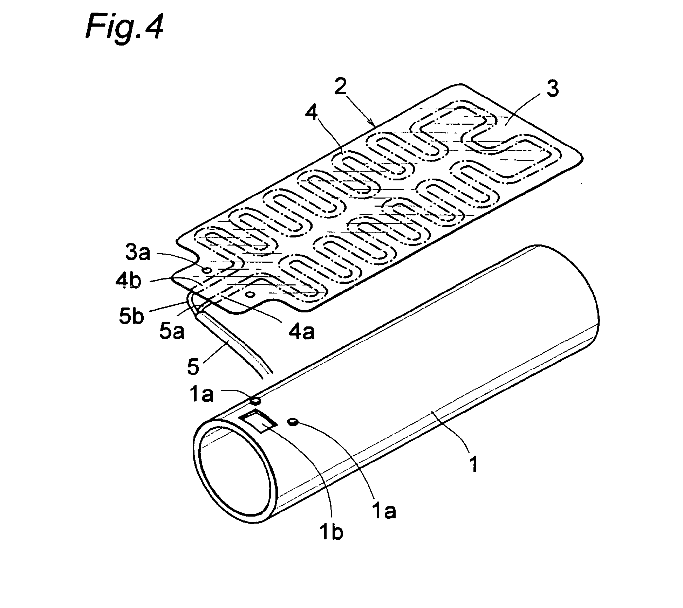

Both ends of the electric resistance member 4 are formed as wire connecting terminals 4a, 4b and are arranged side by side at one end of the electrically insulating plate 3. In order to position the electrically insulating plate 3 onto the core body 1 correctly, openings 3a are formed in the electrically insulating plate 3 as illustrated in Fig. 4 and projections 1a are formed on the core body 1 to be inserted into said openings. In the outer surface of the core body 1 there is formed a recess 1b for accommodating connection terminals 4a, 4b to which the mandrels 5a, 5b of the heater unit 2 are connected.

When the heater unit 2 has a sufficient elasticity, the heater unit 2 is bent along the outer surface of the core body 1 and is adhered onto the core body 1 with an adhesive agent such that the electric resistance member 4 is opposed to the outer surface of the core body 1. Although the electric resistance member 4 is brought into direct contact with the core body 1, since the core body 1 is made of an electrically insulating synthetic resin, there is no problem.

Upon molding of rubber, in order to prevent a synthetic resin material from being injected into a space between the core body 1 and the heater unit 2 to peal off the heater unit, the heater unit 2 should be intimately secured to the core body 1.

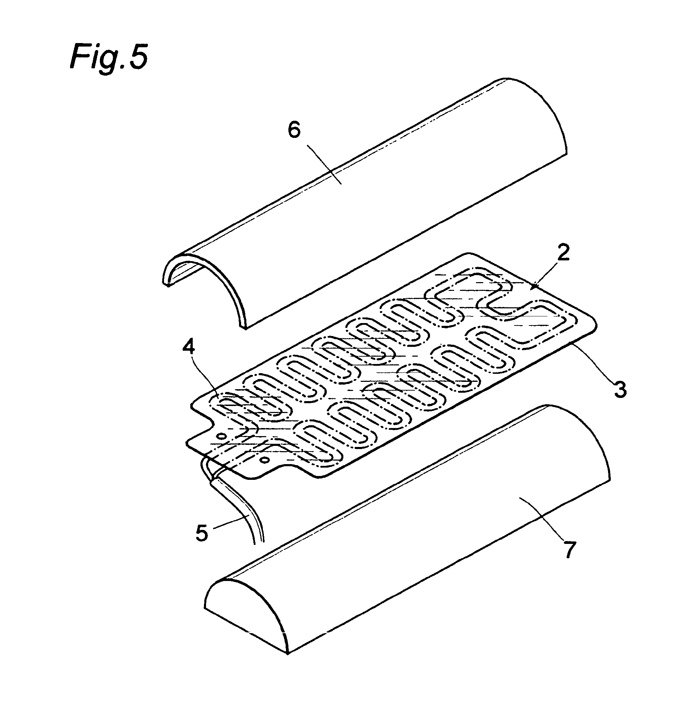

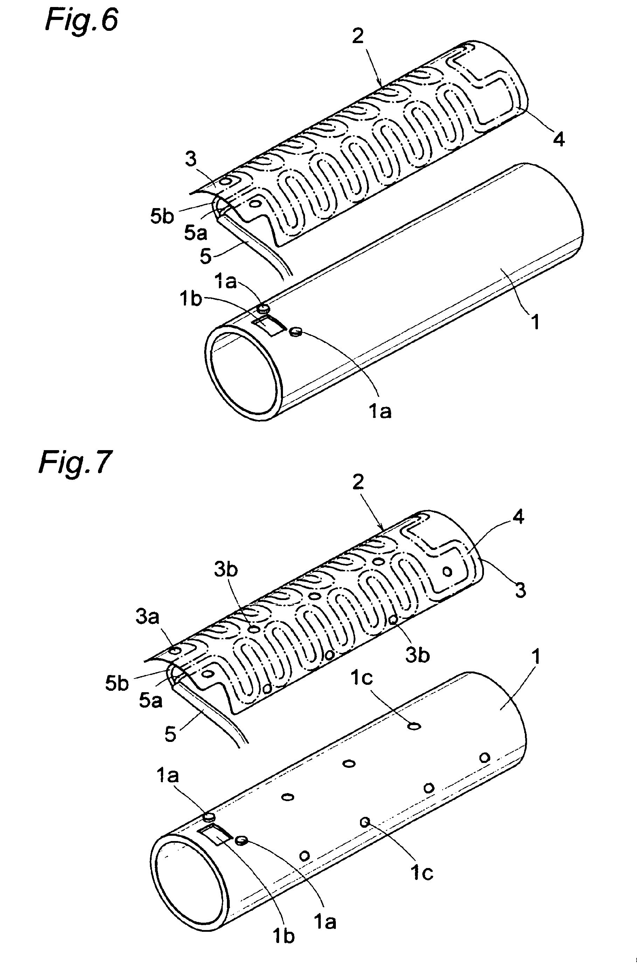

If the electrically insulating plate 3 has a large thickness and is hardly bent, the insulating plate 3 may be heated and bent by means of heating and shaping tools 6 and 7 shown in Fig. 5 into a desired shape corresponding to the core body 1 as illustrated in Fig. 6. Then, the heater unit 2 can be easily adhered onto the core body 1.

Furthermore, as shown in Fig. 7, through holes 1c and 3b are formed in the core body 1 and heater unit 2, respectively such that in an assembled condition, these through holes are communicated with each other. Then, upon injecting synthetic rubber after cementing the heater unit 2 onto the core body 1 as depicted in Fig. 8, the rubber material can flow through the through holes 3b, 1c to form a molded synthetic rubber body. Moreover, during a usage of the handle grip, the heater unit 2 can be prevented from being displaced with respect to the core body 1.

According to the invention, the connection terminals 4a and 4b of the electric resistance member 4 are arranged to form a step with respect to a direction of the electric power supply wire 5 as illustrated in Fig. 9. Then, the wire can be connected to the electric resistance member much more easily.

After adhering the heater unit 2 onto the core body 1 in the manner explained above, an assembly is inserted into a molding box and a synthetic rubber material is injected into both inside and outside of the assembly to form a molded rubber body 30 having a large thickness. The molded rubber body 30 has a slip stopping function as well as an electrical insulating function.
The handle grip with heater thus formed may be secured to a handle of a motorcycle. Since the heater unit 2 has a small volume and has no protrusion and depression, the rubber molding operation can be performed easily while the heater unit does not constitute obstacle.

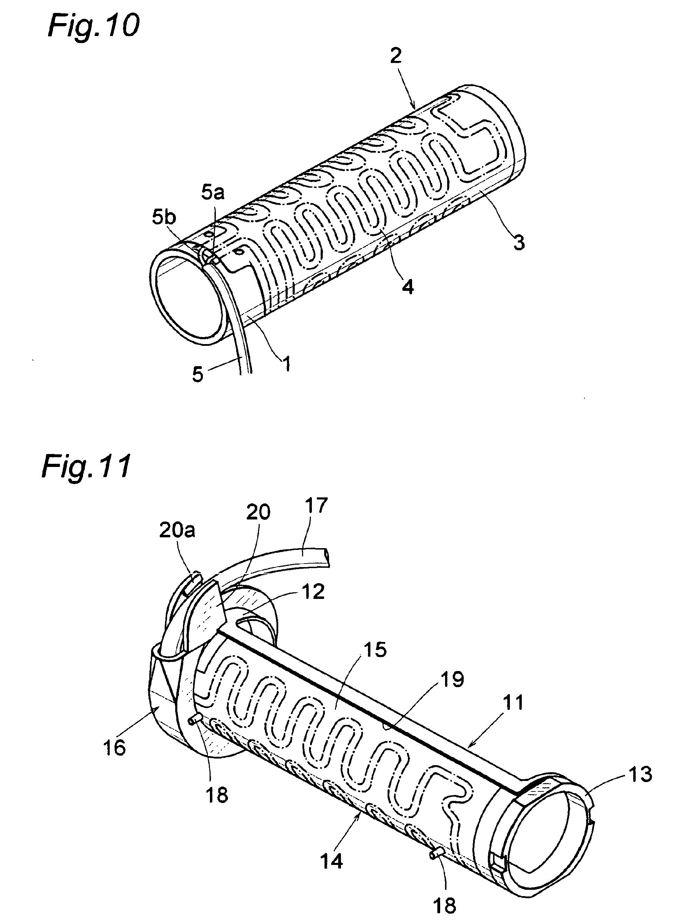

Fig. 10 shows a modified embodiment, in which the core body 1 is wholly covered with the heater unit 2. Such a modified embodiment may be manufactured in a same manner as that explained above.

Fig. 11 is a perspective view showing another handle grip having a heater unit. A core body 11 is formed as a semi-cylindrical shape and includes a ring-shaped portion 12 at a base end and a ring-shaped portion 13 at a free end, and a heater structure body 14 is adhered onto an outer surface of the core body 11.

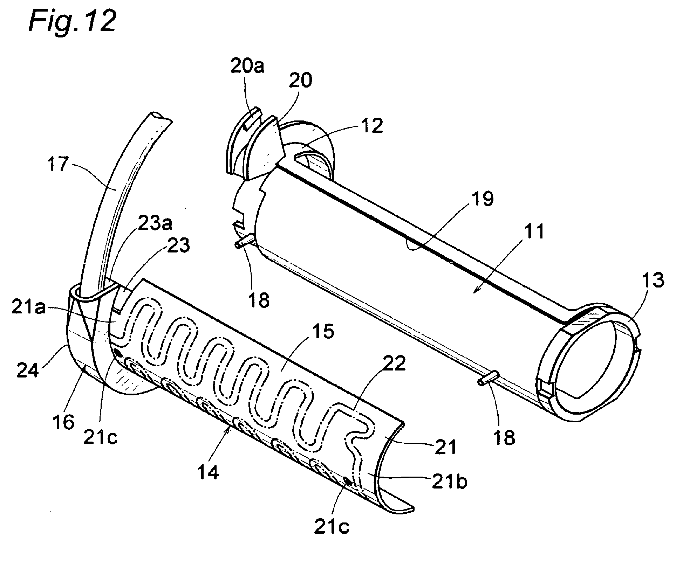

As illustrated in Fig. 12, the heater structure body 14 is consisting of a sheet-like heater unit 15, a wire cover 16 and an electric power supply wire 17. Near both ends of the core body 11, there are formed heater holding projections 18 and a pair of supporting grooves 19 are formed at elongated outer edges of the core body 11 such that these supporting grooves are faced with each other to accommodate both ends of the heater unit 15. On outer surfaces of the ring-shaped portion 12 formed at the base end of the core body 11, there are formed stopping pieces 20 each having a stopping claw 20a for supporting the electric power supply wire 17.

The heater unit 15 has given size and shape corresponding to an outer surface of the core body 11. Like as the heater unit described with reference to Figure 1 to 10, an electric resistance member 22 is adhered on one side of an electrically insulating plate 21 and, according to the invention, includes connection terminals having a stepped configuration, as illustrated in Figure 9.

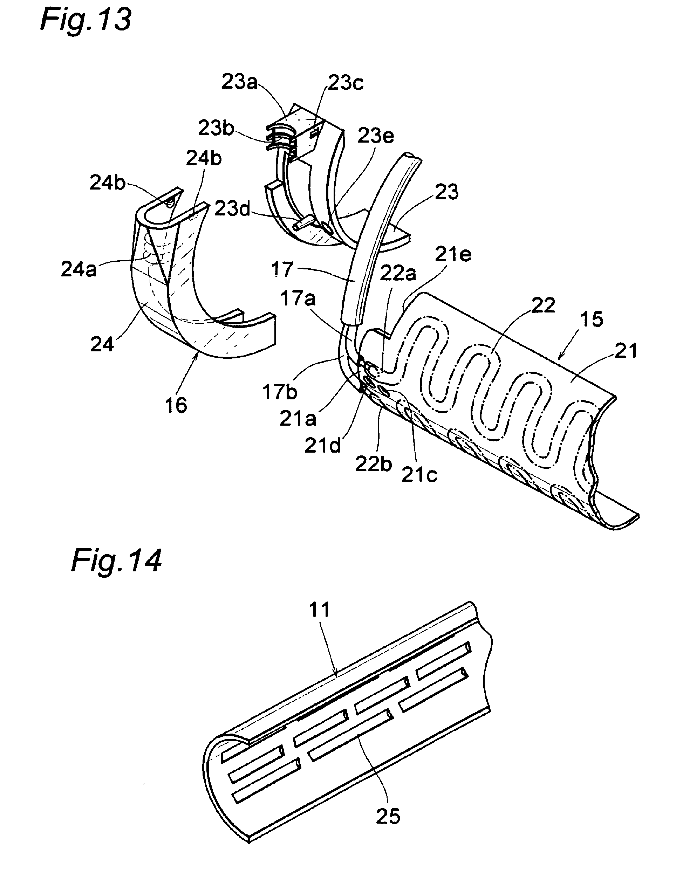

As illustrated in Fig. 13, both ends 22a and 22b of the electric resistance member 22 are arranged at a root end portion 21a of the electrically insulating plate 21 and positioning through holes 21c are formed near the root end portion 21a as well as a free end portion 21b to be inserted into positioning pins 18 formed on the core body 11 for fixing the heater unit.

Furthermore, the electric power supply wire 17 is connected to the ends 22a and 22b of the electric resistance member 22. The power supply wire 17 has two mandrels 17a, 17b covered with electrically insulating coatings and a common electrically insulating outer sheath. After pealing off the outer sheath at an end portion and removing the electrically insulating coatings are removed to expose both ends of the mandrels 17a, 17b, the exposed ends of the mandrels 17a, 17b are connected to the both ends 22a, 22b of the electric resistance member 22 by soldering or welding.

To the root end portion 21a of the electrically insulating plate 21 is secured a wire cover 16 having an arcuate configuration corresponding to the ring-shaped portion 12 formed at the root base portion of the core body 11. The wire cover 16 is brought into contact with the root base portion 21a of the electrically insulating plate 21 and includes the connecting portion consisting of the electric power supply wire 17, a base member 23 having a large width and covering a connected portion between the both ends 22a, 22b of the electric resistance member 22, and a cover member 24 having a small width, being clamped onto the base member 23, and being formed as a groove having a U-shaped cross section.

A wire receiving portion 23a is formed at one end of the base member 23 such that the wire receiving projection is inserted into one end of the wire cover 24. Wire clamping portions 23b and 24a are formed at a top end of the wire receiving portion 23a and an inner surface of a corresponding portion of the cover member 24, each of said wire clamping portions 23b and 24a being formed by a plurality of ridges such that the outer sheath of the electric power supply wire 17 is clamped between these ridges. In both side walls of the wire receiving portion 23a there are formed a pair of coupling recesses 23c and in side walls of a corresponding portion of the wire cover 24 there are formed a pair of coupling projections 24b which cooperate with said clamping recesses 23c to couple the base member 23 and wire cover member 24 with each other.

At a middle of the root base portion 21a of the electrically insulating plate 21 there is formed a anchor pin insertion hole 21d, and a cutout portion 21e is formed at a corner of the root base portion 21a such that the wire receiving portion 23a can extrude beyond the insulating plate 21 upon assembling. An anchor pin 23d is formed on the base member 23 such that the anchor pin 23d can be inserted into the anchor pin insertion hole 21d upon assembling. Adjacent to the anchor pin 23d provided on the base member 23, there is formed a through hole 23e into which the heater positioning pin 18 is inserted upon assembling.

Upon assembling the heater structure body 14, the base member 23 is brought into contract with the inner surface of the root base portion 21a of the electrically insulating plate 21 such that the connecting portions of the mandrels 17a, 17b of the electric power supply wire 17 are covered with the base member 23, the anchor pin 23d extending from the base member 23 is inserted into the anchor pin insertion hole 21d formed in the electrically insulating plate 21, and the electric power supply wire 17 is positioned on the base member 23. The cover member 24 is placed on the base member 23, and one end of the cover member 24 is clamped on the wire receiving portion 23a of the base member 23 by clamping the coupling projections 24b with the coupling recesses 23c.

In this manner, the connecting portions of the electric power supply wire 17 are covered with the base member 23 and the electrically insulating outer sheath of the electric power supply wire 17 is fixedly clamped between the wire clamping portions 23b and 24a and the electric power supply wire 17 is held within the wire cover 16. It should be noted that the connecting portions of the electric power supply wire 17 may be sandwiched between the electrically insulating plate 21 and the core body 11 and only the electric power supply wire 17 may be accommodated within the wire cover 16.

The heater structure body 14 assembled in a manner explained above is secured on to the outer surface of the core body 11 with the aid of an adhesive agent. During this operation, the two heater positioning pins 18 provided on the core body 11 are inserted into the positioning through holes 23e formed in the base member 23 and the two positioning through holes 21c formed in the electrically insulating plate 21, and both side edges of the heater unit 15 are inserted into the supporting grooves 19 formed in the core body 11. Moreover, a part of the electric power supply wire 17 is placed between the stopping claws 20a formed on the stopping pieces 20. After that, tip portions of the heater positioning pins 18 extending beyond the heater structure body 14 are fused to prevent the heater structure body 14 from being removed from the core body 11.

Since the both side edges of the heater unit 15 are inserted into the supporting grooves 19 of the core body 11, a space is hardly formed between the heater unit 15 and the core body 11. Therefore, a synthetic rubber material hardly escapes to a space between the heater unit 15 and the core body 11 during the molding operation, and the position of the heater unit 15 relative to the core body 11 is stable. Moreover, since the heater unit 15 is positioned on the outer surface of the core body 11 with the aid of the heater positioning pins 18, it is possible to secure stably the heater unit 15 onto the outer surface of the core body 11.

It should be noted that according to the invention, a space between the electrically insulating plate 21 and the wire cover 16 as well as a space between the base member 23 and the cover member 24 may be filled with an epoxy adhesive agent to fix these portions much more firmly. Furthermore, another similar semi-cylindrical core body may be assembled with the core body 11 to form a substantially cylindrical core body and an assembly of the substantially cylindrical core body having the heater structure body 14 secured thereto may be set within a molding box and a synthetic rubber material may be injected into the molding box.

According to the wire cover 16 of the present embodiment, since the coupling projections 24b of the cover member 24 are engaged with the coupling recesses 23c formed in the base member 23, the cover member 24 can be secured stably and firmly to the base member 23. Moreover, the electric power supply wire 17 can be firmly fixed by the wire clamping portions 23b, 24a, and since the electric power supply wire 17 is held by the stopping claws 20a of the stopping pieces 20 provided on the ring-shaped portion 12 at the root base portion of the core body 11, a part of the electric power supply wire 17 extending out of the wire cover 16 can be stably supported.

Upon molding a synthetic rubber material on the handle grip with heater assembled in the manner explained above, any positional deviation between the heater unit 15 and the mandrels 17a, 17b and any repelling and deformation of these parts within the molding box due to an injection of a high temperature molten of a synthetic rubber can be effectively avoided. Although these parts might be expanded or shrunk more or less during the heating or cooling process or the electric power supply wire 17 is subjected to tension during the molding process or after molding process, the wire cover 16 can effectively prevent the connecting portions of the mandrels 17a, 17b from being subjected to a large stress and, thus, the electric power supply wire 17 can be protected from breakage. Moreover, since the electric power supply wire 17 is supported by the wire clamping portions 23b, 24a of the wire cover 16, the synthetic rubber could be hardly injected into the wire cover 16.

As stated above, the arcuate wire cover 16 is provided at the root end portion of the grip and the electric power supply wire 17 is covered with the wire cover 16, and therefore even if positional deviation, repelling, deformation, thermal expansion and cooling shrinkage of the heater unit might occur during the molding process of the synthetic rubber or even if the electric power supply wire 17 is subjected to a tension during the molding operation or after the molding operation, the electric power supply wire 17 is not pulled with a large force and could be hardly broken.

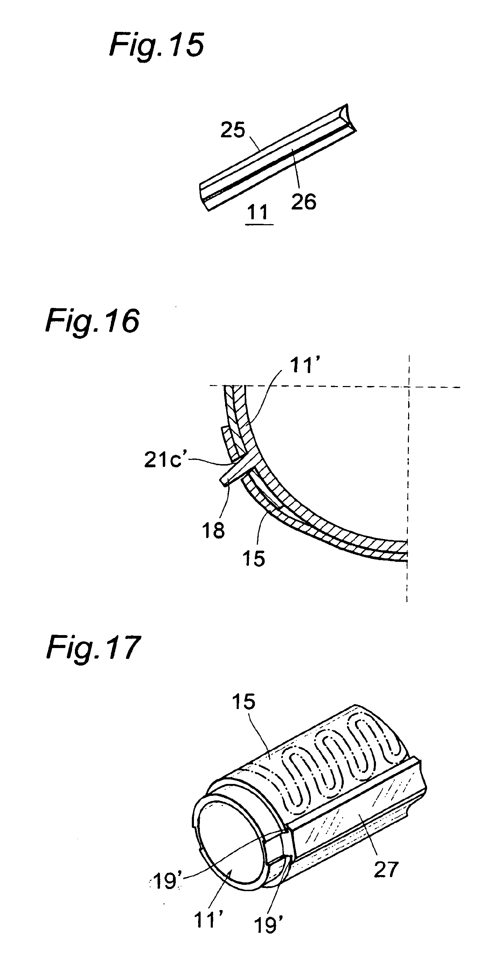

In order to increase a fixing force between the molded synthetic rubber body and the core body 11, a number of recesses 25 having various lengths may be formed in a mosaic manner in the inner surface of the core body 11 as depicted in Fig. 14. In this manner, a deviation of the core body 11 with respect to the molded synthetic rubber body can be effectively suppressed. In this case, when a projection 26 may be formed in the elongated recess 25 as shown in Fig. 15, the core body 11 can be secured to the molded synthetic rubber body much more firmly.

It should be noted that according to the invention, a cylindrical core body may be used instead of the semi-cylindrical core body 11. In this case, the heater unit 15 is wound into a cylindrical body without using the supporting grooves 19 such that side edges of the heater unit are overlapped with each other as illustrated in Fig. 16. In the overlapped side edges of the heater unit 15, there are formed two pairs of positioning through holes 21c' and the heater positioning pins 18 extending from the cylindrical core body 11' near both ends of the core body are inserted into the heater positioning through holes 21c'. In this manner, the heater unit 15 can be stably fixed onto the cylindrical core body 11'.

Fig. 17 depicts a modified embodiment of the heater supporting grooves. In order to fix the heater unit 15 to the cylindrical core body 11' by winding the heater section around the core body, a trapezoidal portion 27 is formed on the core body 11' and a pair of supporting grooves 19' are formed along longitudinal side edges of the trapezoidal portion 27. The longitudinal side edges of the heater unit 15 which has been bent into a substantially cylindrical shape are inserted into these heater supporting grooves 19'.

Since the side edges of the heater unit 15 are firmly inserted into the heater supporting grooves 19' of the core body 11', a rubber material can be effectively prevented from being injected into a space between the core body 11' and the heater unit 15 during the molding operation, and the heater unit 15 can be fixed at a given position accurately.

### Industrial Applicability

According to the present invention, the electric resistance member is formed by punching a SUS foil having a superior temperature rising characteristic into a FFC (flexible flat circuit). As compared with the known handle grips with heater formed by FPC, the heater unit can be manufactured without using a chemical agent, which might affect the environment, and recycle of SUS can be realized.

The surface type heat-generating unit is generally expensive, but the heater unit of the handle grip with heater according to the invention has a simple structure and can be manufactured simply, and therefore the heater unit formed as the surface type heat-generating member can be produced at a low cost.

## Claims

1. A heatable handle grip including a cylindrical or semi-cylindrical core body (1) made of an electrically insulating synthetic resin and a heater unit (2), **characterized in that** said heater unit (2) includes an electrically insulating plate (3) and a strip-shaped electric resistance member (4) formed by uniformly applying a metal foil onto a surface of the electrically insulating plate (3), punching the metal foil and removing an unnecessary portion of the metal foil, said heater unit (2) is further bent and is adhered onto the outer surface of the core body (1), the electric resistance member (4) comprises two connecting ends (4a, 4b) which extend in a longitudinal direction of the core body (1) and which have different lengths defining a stepped configuration, an electric power supply wire (5) connected to the connecting ends (4a, 4b) extends from the connecting ends (4a, 4b) in a circumferential direction of the core body (1) and **in that** said handle grip further comprises a molded synthetic rubber body provided to cover the inner and outer surfaces of an assembly of the core body (1) and heater unit (2).

2. The heatable handle grip according to claim 1, **characterized in that** said electric resistance member (4) has a small width, a large length and a zigzag shape, and both ends of the electric resistance member (4) form connecting portions for an electric power supply wire (5).

3. The heatable handle grip according to claim 1, **characterized in that** said electrically insulating plate (3) has formed therein positioning holes (3a) and said core body (1) has formed thereon positioning pins (1a) which are inserted into said positioning holes (3a).

## Patentansprüche

1. Heizbarer Griff, aufweisend einen zylindrischen oder halbzylindrischen Kernkörper (1). der aus einem elektrisch isolierenden Kunstharz hergestellt ist, und eine Heizeinheit (2), **dadurch gekennzeichnet, dass** die Heizeinheit (2) eine elektrisch isolierende Platte (3) und ein streifenförmiges elektrisches Widerstandselement (4) aufweist, das durch gleichmäßiges Aufbringen einer Metallfolie auf eine Fläche der elektrisch isolierenden Platte (3). Durchstoßen der Metallfolie und Entfernen eines nicht benötigten Abschnitts der Metallfolie gebildet ist, wobei die Heizeinheit (2) ferner gebogen ist und an die Außenfläche des Kernkörpers (1) geklebt ist, wobei das elektrische Widerstandselement (4) zwei Verbindungssenden (4a. 4b) umfasst, die sich in einer Längsrichtung des Kernkörpers (1) erstrecken und unterschiedliche Längen aufweisen, die eine gestufte Konfiguration definieren, einen elektrischen Stromversorgungsdraht (5), der mit den Verbindungsenden (4a, 4b) verbunden ist, sich von den Verbindungsenden (4a, 4b) in einer Umfangsrichtung des Kernkörpers (1) erstreckt, und dadurch, dass der Griff ferner einen Formkörper aus synthetischem Kautschuk umfasst, der zum Abdecken der Innen- und Außenflächen einer Baugruppe des Kernkörpers (1) und der Heizeinheit (2) vorgesehen ist.

2. Heizbarer Griff nach Anspruch 1, **dadurch gekennzeichnet, dass** das elektrische Widerstandselement (4) eine geringe Breite, eine große Länge und eine Zickzackform aufweist, und beide Enden des elektrischen Widerstandselements (4) Verbindungsabschnitte für einen elektrischen Stromversorgungsdraht (5) bilden.

3. Heizbarer Griff nach Anspruch 1, **dadurch gekennzeichnet, dass** in der elektrisch isolierenden Platte (3) Positionierungslöcher (3a) gebildet sind und an dem Kernkörper (1) Positionierungszapfen (1a) gebildet sind, die in die Positionierungslöcher (3a) eingeführt sind.

## Revendications

1. Poignée chauffante comprenant un corps d'âme cylindrique ou semi-cylindrique (1) constitué d'une résine synthétique électriquement isolante et d'une unité chauffante (2), **caractérisée en ce que** ladite unité chauffante (2) contient une planque électriquement isolante (3) et un élément formant une résistance électrique en forme de bande (4) obtenu par application d'une feuille métallique sur une surface de la plaque électriquement isolante (3), poinçonnage de la feuille métallique et élimination d'une partie superflue de la feuille métallique, ladite unité chauffante (2) étant en outre courbée et collée sur la surface extérieure du corps d'âme (1), l'élément formant une résistance électrique (4) comprenant deux extrémités de raccordement (4a, 4b) qui s'étendent dans une direction longitudinale du corps d'âme (1) et qui ont différentes longueurs définissant une configuration étagée, un fil d'alimentation électrique (5) relié aux extrémités de raccordement (4a, 4b) s'étendant depuis les extrémités de raccordement (4a, 4b) dans une direction circonférentielle du corps d'âme (1) et ladite poignée comprenant en outre un corps moulé en caoutchouc synthétique prévu sur les surfaces intérieure et extérieure d'un ensemble formé par le corps d'âme (1) et par l'unité chauffante (2).

2. Poignée chauffante selon la revendication 1, **caractérisée en ce que** ledit élément formant une résistance électrique (4) a une petite largeur, une grande longueur et une forme en zigzag, et où les deux extrémités de l'élément formant une résistance électrique (4) forment des parties de connexion pour un fil d'alimentation électrique (5).

3. Poignée chauffante selon la revendication 1, **caractérisée en ce que** ladite plaque électriquement isolante (3) contient en elle des trous de positionnement (3a) et où ledit corps d'âme (1) contient sur lui des goupilles de positionnement (1a) qui sont insérées dans lesdits trous de positionnement (3a).
